(19) **Europäisches Patentamt / European Patent Office / Office européen des brevets**

(11) **EP 2 123 447 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
*B32B 15/01* (2006.01)     *C21D 9/42* (2006.01)
*F41H 5/04* (2006.01)

(21) Anmeldenummer: **08103856.4**

(22) Anmeldetag: **07.05.2008**

(54) **Verbundwerkstoff mit ballistischer Schutzwirkung**

Composite material with ballistic protective effect

Matière première composite dotée d'un effet de protection balistique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**25.11.2009 Patentblatt 2009/48**

(73) Patentinhaber: **ThyssenKrupp Steel Europe AG 47166 Duisburg (DE)**

(72) Erfinder:
- **Becker, Jens-Ulrik 47058 Duisburg (DE)**
- **Hofmann, Harald 44357 Dortmund (DE)**
- **Höckling, Christian 45478 Mühlheim a.d. Ruhr (DE)**
- **Kern, Andreas 40885 Ratingen (DE)**
- **Schriever, Udo 45133 Essen (DE)**

- **Tamler, Horst Walter 58453 Witten (DE)**
- **Tschersich, Hans-Joachim 46282 Dorsten (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
| | |
|---|---|
| EP-A- 0 247 020 | EP-A- 0 509 854 |
| EP-A- 0 731 332 | AT-B- 372 113 |
| DE-B3-102005 006 606 | DE-C1- 2 921 854 |
| GB-A- 1 444 063 | JP-A- 6 093 370 |
| JP-A- H0 484 682 | US-A- 2 438 759 |
| US-A- 4 645 720 | US-A- 5 213 905 |
| US-A- 5 418 074 | US-A1- 2003 029 530 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Verbundwerkstoff mit ballistischer Schutzwirkung aufweisend eine erste, äußere Schicht aus einer ersten Stahllegierung und mindestens eine unter der ersten Schicht angeordnete zweite Schicht aus einer zweiten Stahllegierung und mindestens eine unterhalb der zweiten Schicht angeordnete dritte Schicht aus einer dritten Stahllegierung. Darüber hinaus betrifft die Erfindung eine erfindungsgemäße Verwendung des Verbundwerkstoffs.

Für den ballistischen Schutz von Lebewesen, Gegenständen und Vorrichtungen, insbesondere Gebäuden oder Fahrzeugen werden Sicherheitsstähle eingesetzt. Um eine möglichst gute ballistische Schutzwirkung zu erzielen, weisen die hier eingesetzten Sicherheitsstähle neben einer möglichst hohen Festigkeit eine möglichst hohe Zähigkeit kombiniert mit einer möglichst hohen Härte auf. Eine große Härte der verwendeten Stähle leistet einen hohen Eindringungswiderstand gegen eine ballistische Einwirkung und bewirkt beispielsweise ein Aufweiten eines Projektils. Hierdurch kann die Eindringtiefe in das Material vermindert werden. Gleichzeitig kann durch eine große Zähigkeit viel Energie der ballistischen Einwirkung im Material absorbiert werden. Ein solcher Werkstoff bietet zudem einen großen Widerstand gegenüber einer nicht erwünschten Rissbildung des Materials. Härte und Zähigkeit des Materials wirken in der Regel einander entgegen, so neigt ein Material mit sehr großer Härte beispielsweise meist zur Versprödung. Werkstoffe mit hoher Zähigkeit weisen dagegen keine großen Härten auf. Durch die Zugabe von teuren Legierungselementen, wie beispielsweise Nickel, Molybdän, Chrom oder Kobalt, kann zwar ein sehr guter Kompromiss zwischen Zähigkeit und Härte gefunden werden, allerdings bei sehr hohen Legierungs- und Herstellkosten. Darüber hinaus muss auch beachtet werden, dass die Werkstoffe umformbar bleiben, damit diese entsprechend einsetzbar sind.

Um eine deutlich kostengünstigere Lösung zur Verfügung zu stellen, sind aus dem Stand der Technik, beispielsweise der deutschen Offenlegungsschrift DE 29 21 854 C1, Verbundwerkstoffe bekannt, welche aus zwei unterschiedlichen Stahllegierungen bestehen. Die erste, äußere Stahllegierungsschicht besteht beispielsweise aus einer Stahllegierung mit einem Kohlenstoffgehalt (C-Gehalt) von 0,35 bis 0,7 Gew.-%, einem Si-Gehalt von 0,10 bis 0,70 Gew.-%, einem Mn-Gehalt von 0,5 bis 1 Gew.-%, P und S jeweils weniger als 0,02 Gew.-%, Cr 1,3 bis 2,6 Gew.-%, Ni 0,2 bis 3,6 Gew.-%, Mo 0,4 bis 0,7 Gew.-% und V 0,04 bis 0,3 Gew.-%, Rest Fe. Diese äußere, der Beschussseite zugewandte Schicht soll eine besonders hohe Härte aufweisen. Zusammen mit der darunter angeordneten Stahllegierungsschicht mit einer Legierungszusammensetzung von weniger als 0,15 Gew.-% C, 0,15 bis 0,35 Gew.-% Si, 0,85 bis 1,6 Gew.-% Mn, P und S jeweils weniger als 0,02 Gew.-%, 0,5 bis 0,8 Gew.-% Ni und 0,20 bis 0,40 Gew.-% Al, Rest Fe, welche zäher und weicher ist, ergibt sich ein verbesserter ballistischer Schutz. Zwar ist mit dem zweischichtigen Verbundwerkstoff eine deutliche Verbesserung gegenüber einem einschichtigen Werkstoff im Hinblick auf eine kostengünstigere ballistische Schutzwirkung erzielt worden, allerdings besteht ein beständiges Bedürfnis, die ballistische Schutzwirkung bei gleich bleibender oder verringerter Dicke zu verbessern, um beispielsweise bei Panzerung von Fahrzeugen eine Gewichtsreduzierung zu erreichen.

Dreilagige Verbundwerkstoffe, die durch Walzplattieren hergestellt werden und sich zur Verwendung als Panzerbleche eignen, sind bereits aus dem Stand der Technik der AT 372 113 bekannt. Bei den in dieser Druckschrift offenbarten Verbundwerkstoffen können die Innenlage und die beiden Außenlagen aus unterschiedlichen Stahllegierungen bestehen.

Dokument US 2,438,759 A betrifft ein Verfahren zur Herstellung eines Panzerblechs als Verbundblech aus Stahl bei dem Schichten mit verschiedenen Kohlenstoffgehalten und entsprechend unterschiedlichen Eigenschaften bezüglich der Härte und Zähigkeit miteinander gefügt und erhitzt werden, bis es zur Ausbildung einer Kohlenstoffdiffusionszone im Fügebereich kommt.

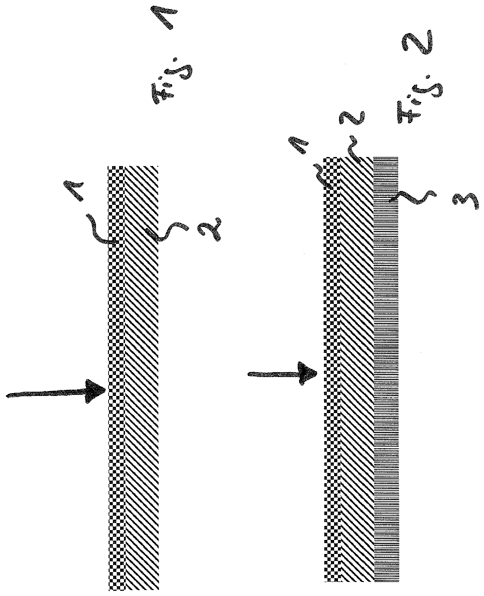

DE 10 2005 006 606 B3 betrifft ein Verfahren zum Herstellen von walzplattiertem Warmband zur Weiterverarbeitung zu Kaltband. In Fig. 2 ist ein dreilagiges Plattenpaket gezeigt, bei dem die äußeren Platten eine hohe Verschleißfestigkeit aufweisen, während die innere Platte weich und gut verformbar ist. Spezielle Legierungsgehalte werden jedoch, abgesehen von Kohlenstoff, nicht offenbart.

Die US 5,418,074 offenbart ein Verbundmaterial mit einem Kernwerkstoff aus dem Stahllegierungstyp CK 15, welcher auf beiden Seiten mit einem Stahl vom Typ 16MnCr5 plattiert ist.

Die EP 0 509 854 A beschreibt ein Verfahren zur Herstellung eines dreilagigen Bleches mit aluminiumfreien äußeren Schichten, dass eine hohe Abriebsfestigkeit haben soll.

Die US 4,645,720 A offenbart eine Panzerplatte, die aus zwei Ebenen aus plattiertem Stahl zusammengesetzt wird. Jede dieser Ebenen besteht jeweils aus derselben oberen und unteren Stahlschicht, wobei die Ebenen so miteinander verbunden sind, dass die jeweilige obere Schicht der Ebenen aufeinander liegt. Demnach besteht die Panzerplatte prinzipiell aus drei Stahlschichten, nämlich der Innenschicht und den beiden Außenschichten. Bezüglich der Innenschichten wird offenbart, dass diese Schichten eine besonders große Härte aufweisen. Die beiden Außenschichten sollen ebenfalls über den größtmöglichen Grad an Härte verfügen.

Aus der US 2003/0029530 A1 ist ein Verbundwerkstoff aus Stahl mit drei Legierungsschichten bekannt, welcher zur Erzeugung eines flachen Legierungsgradienten durch ein aufwändiges simultanes Gießen hergestellt wird. Eine ballistische Schutzwirkung des Verbundwerkstoffs wird nicht offenbart.

Hiervon ausgehend liegt der vorliegenden Erfindung die Aufgabe zugrunde, einen Verbundwerkstoff mit ballistischer Schutzwirkung vorzuschlagen, welcher zu einer weiteren Verbesserung der ballistischen Schutzwirkungseigenschaften führt und eine Verringerung des Gewichts bzw. der Wanddicken des Verbundwerkstoffs ermöglicht. Darüber hinaus sollen auch die Herstellungs- und Legierungskosten für Verbundwerkstoffe mit ballistischer Schutzwirkung verringert werden.

Die oben aufgezeigte Aufgabe wird durch einen Verbundwerkstoff mit den Merkmalen der unabhängigen Patentansprüche 1 bis 4 und 5 gelöst. Weitere Ausführungsformen ergeben sich durch die abhängigen Patentansprüche.

Die erfindungsgemäße Kombination an Legierungsbestandteilen führt zu einer verbesserten Härte bei sehr guten Zähigkeits- oder Dehnungswerten in der ersten, äußeren, bzw. dem Beschuss zugewandten Schicht. Durch die Begrenzung des Chrom-Gehalts auf weniger als 1,2 Gew.-% wird der Bildung von Karbiden und damit einer Verringerung der Zähigkeit vorgebeugt. Außerdem ist das Legierungselement Chrom relativ teuer, so dass die Begrenzung des Chrom-Gehalts gleichzeitig zu einer Kostensenkung des erfindungsgemäßen Verbundwerkstoffs führt. Das Vorhandensein von Chrom fördert jedoch die Durchhärtbarkeit der Stahllegierungsschicht. Höhere Mangan-Gehalte verbessern zwar die Zähigkeit, die Durchhärtbarkeit nimmt jedoch mit zunehmendem Mangangehalt aufgrund der Neigung zur Kornfeinung ab. Da in der äußeren Schicht hohe Härten gefordert werden, ist der Mangan-Gehalt auf 2,65 Gew.-% beschränkt, so dass die Durchhärtbarkeit erhalten bleibt. Aluminium bindet Stickstoff zu Nitriden ab und führt zur Beruhigung des Stahls. Dieser Effekt wird ab Gehalten von 0,015 Gew.-% spürbar. Darüber hinaus wird bei höheren Gehalten die Bildung von ferritischem Gefüge unterstützt, so dass die Bildung von Härtungsgefüge begünstigt wird. Zusätzlich wird die Martensitstarttemperatur der Stahllegierung durch die Aluminiumgehalte angehoben, wobei der Abfall der Martensitstarttemperatur aufgrund des Zulegierens von Chrom und Mangan bei Al-Gehalten bis 1,55 Gew.-% kompensiert werden kann. Die Einstellung einer "normalen" Martensitstarttemperatur begünstigt die Durchhärtung des gesamten Verbundwerkstoffs.

Die erfindungsgemäße Kombination der Legierungselemente der ersten Stahllegierung ermöglicht die Einstellung eines günstigen Mikrogefüges der Stahllegierung der äußeren Schicht, so dass verbesserte Härten und Zähigkeiten bereitgestellt werden können. Aufgrund der verbesserten Härte bei gleich bleibenden Zähigkeits- bzw. Dehnungswerten kann beispielsweise ein auf die äußere Schicht auftreffendes Geschoss oder Splitter stark aufgeweitet werden, ohne dass es zur Rissbildung im Verbundwerkstoff kommt. Die zweite Schicht sorgt aufgrund ihrer im Vergleich höheren Dehnungswerte dafür, dass insbesondere die erste Schicht nicht splittert bzw. dort entstandene Splitter mit der zweiten Schicht wieder aufgefangen werden, so dass im Ergebnis eine deutlich verbesserte ballistische Schutzwirkung erzielt wird. Vorzugsweise wird der Kohlenstoffgehalt in der ersten Schicht des Verbundwerkstoffs auf 0,45 Gew.-% begrenzt, um die Schweißbarkeit zu steigern. Eine weitere Ausgestaltung der ersten äußeren Stahllegierungsschicht des erfindungsgemäßen Verbundwerkstoffs wird dadurch erzielt, dass der Mangangehalt mindestens 0,65 Gew.-% beträgt, so dass höhere Zähigkeiten zur Verfügung gestellt werden können. Darüber hinaus kann vorzugsweise der Chromgehalt auf 0,7 Gew.-% beschränkt werden, was neben einer weiteren Kostenreduzierung, eine Verringerung der Karbidbildung bei Beibehaltung der Durchhärtbarkeit ermöglicht.

Erfindungsgemäß kann die ballistische Schutzwirkung dadurch weiter gesteigert werden, dass die zweite Stahllegierung der zweiten Schicht die folgenden Legierungsbestandteile in Gewichtsprozent aufweist:

|          |          | C   | $\leq$ | 0,4 %,   |
|----------|----------|-----|--------|----------|
|          |          | Si  | $\leq$ | 0,8 %,   |
| 0,05 %   | $\leq$   | Mn  | $\leq$ | 1,5 %,   |
|          |          | Al  | $\leq$ | 10,0 %,  |
|          |          | Cr  | $\leq$ | 1,5 %,   |
|          |          | Ti  | $\leq$ | 0,5 %,   |
|          |          | Nb  | $\leq$ | 0,05 %,  |
|          |          | B   | $\leq$ | 0,005 %, |
|          |          | V   | $\leq$ | 0,5 %,   |
|          |          | Mo  | $\leq$ | 0,6 %,   |
|          |          | P   | $\leq$ | 0,1 %,   |
|          |          | S   | $\leq$ | 0,03 %,  |
|          |          | N   | $\leq$ | 0,3 %,   |
|          |          | Ni  | $\leq$ | 1,5 %,   |
|          |          | Cu  | $\leq$ | 3,0 %,   |
| optional |          | Sn  | $\leq$ | 0,04 %   |

Rest Fe und unvermeidbare Verunreinigungen.

Ist mindestens eine unterhalb der zweiten Schicht angeordnete dritte Schicht aus einer dritten Stahllegierung vorgesehen, kann die ballistische Schutzwirkung weiter verbessert werden. So entspricht die dritte Schicht in ihrer Zusammensetzung erfindungsgemäß der ersten Stahllegierungsschicht und durch die Verwendung einer besonders harten unteren Schicht des Verbundwerkstoffs kann ein Geschoss oder Splitter durch die dritte, untere Schicht gestoppt werden. Bei Verwendung von zwei Schichten mit höherer Dehnung als mittlere und untere Schicht, kann das Energieabsorptionsvermögen insbesondere bei Verwendung einer hochmanganhaltigen zusätzlichen dritten Schicht weiter gesteigert bzw. gezielt auf bestimmte ballistische Einwirkungen eingestellt werden.

Ist gemäß einer ersten Ausführungsform des erfindungsgemäßen Verbundwerkstoffs die Stahllegierung der ersten Schicht ein Vergütungsstahl mit folgenden Anteilen an Legierungsbestandteilen:

| | | | | |
|---|---|---|---|---|
| 0,06 % | ≤ | C | ≤ | 0,25 %, |
| 0,05 % | ≤ | Si | ≤ | 0,4 %, |
| 0,3 % | ≤ | Mn | ≤ | 1,4 %, |
| 0,015 % | ≤ | Al | ≤ | 1,55 %, |
| | | Cr + Mo | ≤ | 0,5 %, |
| | | Ti | ≤ | 0,05 %, |
| | | Nb | ≤ | 0,1 %, |
| | | B | ≤ | 0,005 %, |
| | | P | ≤ | 0,08 %, |
| | | S | ≤ | 0,01 %, |
| | | Ni | ≤ | 4,0 %, |
| | | V | ≤ | 0,5 % und |

Rest Fe und unvermeidbare Verunreinigungen, wobei die zweite Schicht eine höhere Dehnung aufweist als die erste, weist der Verbundwerkstoff vor der Vergütung gute Umformeigenschaften auf und kann auf einfache Weise zu einem Produkt oder zu einer Vorform umgeformt werden, welche in einem abschließenden Vergütungsprozess gehärtet werden kann. Die Herstellung von Bauteilen, beispielsweise Kraftfahrzeugteilen, aus dem Verbundwerkstoff kann entsprechend vereinfacht werden. Als Vergütungsstahlschicht kann beispielsweise eine Schicht aus einem 22MnB5-Stahl verwendet werden.

Eine weitere alternative Ausführungsform des erfindungsgemäßen Verbundwerkstoffs sieht vor, dass die Stahllegierung der ersten Schicht ein Mehrphasenstahl ist, welche folgende Anteile an Legierungsbestandteilen in Gewichtsprozent aufweist:

| | | | | |
|---|---|---|---|---|
| 0,065 % | ≤ | C | ≤ | 0,23 %, |
| 0,07 % | ≤ | Si | ≤ | 1,65 %, |
| 1,45 % | ≤ | Mn | ≤ | 2,65 %, |
| 0,02 % | ≤ | Al | ≤ | 1,55 %, |
| 0,06 % | ≤ | Cr | ≤ | 0,65 %, |
| 0,05 % | ≤ | Mo | ≤ | 0,14 %, |
| | | Nb | ≤ | 0,03 %, |
| | | Ti | ≤ | 0,13 %, |
| | | B | ≤ | 0,005 %, |
| | | P | ≤ | 0,08 %, |
| | | S | ≤ | 0,01 %, |
| | | Ni | ≤ | 4,0 %, |
| | | V | ≤ | 0,5 % und |

Rest Fe und unvermeidbare Verunreinigungen, wobei die zweite Schicht eine höhere Dehnung aufweist als die erste.

Mehrphasenstähle stellen bei noch akzeptablen Umformeigenschaften hohe Festigkeiten ohne Vergütungsprozess zur Verfügung.

Eine weitere Verbesserung im Hinblick auf die Schweißbarkeit bei der Verwendung von Mehrphasenstählen in der ersten Schicht wird durch eine nächste alternative Ausführungsform des erfindungsgemäßen Verbundwerkstoffs dadurch erreicht, dass die Stahllegierung der ersten Schicht ein Mehrphasenstahl ist, welcher folgende Anteile an Legierungsbestandteilen in Gewichtsprozent aufweist:

| | | | | |
|---|---|---|---|---|
| 0,065 % | ≤ | C | ≤ | 0,16 %, |
| 0,07 % | ≤ | Si | ≤ | 0,75 %, |
| 1,45 % | ≤ | Mn | ≤ | 2,0 %, |
| 0,02 % | ≤ | Al | ≤ | 0,05 %, |
| | | Cr | ≤ | 0,6 %, |
| 0,05 % | ≤ | Ti | ≤ | 0,13 %, |
| | | Mo | ≤ | 0,05 %, |
| | | B | ≤ | 0,002%, |
| | | Nb | ≤ | 0,1 %, |
| | | P | ≤ | 0,08 %, |
| | | S | ≤ | 0,01 %, |
| | | Ni | ≤ | 4,0 %, |
| | | V | ≤ | 0,5 % und |

Rest Fe und unvermeidbare Verunreinigungen, wobei die zweite Schicht eine höhere Dehnung aufweist als die erste.

Gemäß einer weiteren alternativen Ausgestaltung des erfindungsgemäßen Werkstoffs ist die Stahllegierung der ersten Schicht ein Sicherheitsstahl, welcher folgende Anteile an Legierungsbestandteilen in Gewichtsprozent aufweist:

| | | | | |
|---|---|---|---|---|
| 0,06 % | ≤ | C | ≤ | 0,4 %, |
| 0,05 % | ≤ | Si | ≤ | 1,0 %, |
| 0,3 % | ≤ | Mn | ≤ | 2,0 %, |
| 0,015 % | ≤ | Al | ≤ | 0,2 %, |
| | | Mo | ≤ | 0,7 %, |
| | | B | ≤ | 0,005%, |
| | | V | ≤ | 0,1 %, |
| | | Ni | ≤ | 3,7 %, |
| | | Cr | ≤ | 1,2 %, |
| | | Ti | ≤ | 0,13 %, |
| | | Nb | ≤ | 0,1 %, |
| | | B | ≤ | 0,005 %, |
| | | P | ≤ | 0,08 %, |
| | | S | ≤ | 0,01 % und |

Rest Fe und unvermeidbare Verunreinigungen, wobei die zweite Schicht eine höhere Dehnung aufweist als die erste.

Die Sicherheitsstähle wurden bisher für einlagige Panzerungen verwendet und ergeben auch zusammen mit der weicheren zweiten Schicht eine weitere Verbesserung im Hinblick auf das Durchdringen und die Verhinderung von Splitterungen bei einem Aufprall eines Geschosses.

Erfindungsgemäß besteht die zweite Schicht aus einem Sonderbaustahl mit den oben angegebenen Legierungsbestandteilen in Gewichtsprozent.

Aufgrund ihrer relativ hohen Härte von etwa 400 HB und einer relativ hohen Zähigkeit bei Dehnungswerten von über 12% kann ein entsprechender Sonderbaustahl ein Auseinanderreißen einer harten äußeren Schicht des Verbundwerkstoffs verhindern und beispielsweise die Fahrzeuginsassen effektiv vor Splittern schützen.

Die zweite Schicht besteht in einem nicht erfindungsgemäßen Ausführungsbeispiel aus einem hochmanganhaltigen Stahl mit den folgenden zusätzlichen Legierungsbestandteilen in Gewichtsprozent:

$$10\ \% \quad \leq \quad Mn \quad \leq \quad 30\ \%.$$

Die hochmanganhaltigen Stähle mit Mangangehalten zwischen 10 und 30 Gew.-% weisen im Hinblick auf die zweite Schicht des Verbundwerkstoffs besonders gute Eigenschaften auf, da sie hohe Dehnungswerte mit extremen Festigkeiten im Bereich von 1000 MPa kombinieren. Die Brinellhärte der Schichten beträgt 300 bis 350 HB und trägt insofern ebenfalls deutlich zum Aufweiten und Abbremsen eines auftreffenden Geschosses bei. Durch den Einsatz der hochmanganhaltigen Stähle kann die Wanddicke der Verbundwerkstoffe mit ballistischer Schutzwirkung noch einmal deutlich reduziert werden. Auch bei hoch dynamischen Belastungen, wie sie bei ballistischen Einwirkungen stattfinden, wird eine hohe Schutzwirkung aufgrund der spezifischen Verfestigungscharakteristik der hochmanganhaltigen Stähle erreicht. Durch Zulegieren von 1 Gew.-% bis zu 10 Gew.-% Al kann die Dichte des Verbundwerkstoffs verringert und damit eine Gewichtsersparnis erzielt werden.

Werden gemäß einer erfindungsgemäßen Ausgestaltung Kobalt- und/oder Nickel freie Stähle als zweite Stahllegierungsschicht verwendet, können gesundheitsschädliche Dämpfe oder Stäube bei der Verarbeitung des Verbundwerkstoffs verringert oder ganz vermieden werden.

Gemäß einer erfindungsgemäßen Ausführungsform ist der Verbundwerkstoff durch Walzplattieren hergestellt. Das Walzplattieren ist ein besonders wirtschaftliches Verfahren, mit welchem sich insbesondere auch dreischichtige Verbundwerkstoffe ohne weiteres herstellen lassen können. Darüber hinaus besteht beim walzplattierten Verbundwerkstoff eine stoffschlüssige, flächige Verbindung zwischen den Schichten des Verbundwerkstoffs, so dass bei einer ballistischen Einwirkung Scherwirkungen in den Grenzschichten zwischen den unterschiedlichen Werkstoffen auftreten, die zusätzlich für die Energieabsorption dienen.

Schließlich ist gemäß einer nächsten vorteilhaften Ausgestaltung der Erfindung der Verbundwerkstoff bis zu einer Materialdicke von 10 mm coilfähig, so dass die Verarbeitung des Verbundwerkstoffs vom Band erfolgen kann. Dies kann durch eine spezifische Auswahl der Schichtdicken von harter und zäher Schicht erreicht werden und/oder durch eine spätere Vergütung im Falle der Verwendung eines Vergütungsstahls.

Gemäß einer zweiten Lehre der vorliegenden Erfindung wird der erfindungsgemäße Verbundwerkstoff für einen ballistischen Schutz für Lebewesen, Vorrichtungen, insbesondere Kraftfahrzeuge oder Bauwerke verwendet. Insbesondere bei Kraftfahrzeugen kommt hier der besondere Vorteil zutage, dass neben der verbesserten ballistischen Schutzwirkung eine Verringerung der Wanddicken und damit eine Verringerung des Gewichts ermöglicht wird.

Es gibt nun eine Vielzahl von Möglichkeiten, den erfindungsgemäßen Verbundwerkstoff sowie dessen Verwendung weiterzubilden und auszugestalten. Hierzu wird verwiesen einerseits auf die dem Patentanspruch 1 nachfolgenden Patentansprüche und andererseits auf die Beschreibung zweier Ausführungsbeispiele in Verbindung mit der Zeichnung. Die Zeichnung zeigt in

Fig. 1    eine schematische Schnittansicht durch ein Ausführungsbeispiel eines erfindungsgemäßen Verbundwerkstoffs mit zwei unterschiedlichen Stahllegierungsschichten und

Fig. 2    ein zweites Ausführungsbeispiel in einer schematischen Schnittansicht eines erfindungsgemäßen Verbundwerkstoffs mit drei Stahllegierungsschichten.

Ein zweilagiges Ausführungsbeispiel eines Verbundwerkstoffs ist in einer schematischen Schnittansicht in Fig. 1 dargestellt. Der Verbundwerkstoff besteht aus einer äußeren Stahllegierungsschicht 1, welche aus einer Stahllegierung mit einer Legierungszusammensetzung gemäß Patentanspruch 1 besteht. Diese Stahllegierungsschicht weist besonders hohe Härten auf, beispielsweise im Bereich von mehr als 600 HB, wohingegen die zweite Schicht in dem vorliegenden Ausführungsbeispiel eine hochmanganhaltige Stahllegierungsschicht ist, welche hohe eine Zähigkeit durch sehr gute Dehnungswerte von bis zu 60% bei hohen Festigkeiten von 1000 MPa und einer Brinellhärte von 300 bis 350 HB zur Verfügung stellt. Durch diese besonders zähe Unterschicht wird ein in Pfeilrichtung auf den Verbundwerkstoff auftreffendes ballistisches Geschoss zunächst in der besonders harten Schicht 1 stark verbreitert, um anschließend durch eine Verformung der unteren Schicht 2 die Aufprallenergie abzubauen.

Im Gegensatz zu den bisher bekannten zweilagigen Verbundwerkstoffen ergibt sich erfindungsgemäß der Vorteil durch die Auswahl der besonders harten Außenschicht in Kombination mit einer besonders zähen unteren Schicht des Verbundwerkstoffs. Im Vergleich zu Sicherheitsstahl und den zuvor bekannten zweilagigen Verbundwerkstoffen mit ballistischer Schutzwirkung lässt sich bei gleichbleibendem ballistischem Schutz damit die Wanddicke des zum ballistischen Schutz eingesetzten Werkstoffs nochmals verringern und so beispielsweise bei Kraftfahrzeugen ohne zusätzliche und aufwändige Fahrwerksänderungen aufgrund des verringerten Eigengewichts ein besserer ballistischer Schutz bzw. eine verbesserte ballistische Schutzklasse erzielen.

Natürlich können auch mehrere Schichten in dem erfindungsgemäßen Verbundwerkstoff vorgesehen sein. Ein erfindungsgemäßes Ausführungsbeispiel mit drei Schichten zeigt Fig. 2 in einer schematischen Schnittansicht. Neben den Schichten 1 und 2 besteht die unterste Schicht aus einer Stahllegierung, welche identisch zu der Stahllegierung der Schicht 1 ist. Die extrem harte Unterschicht 3 dient damit als Auffangschicht für eventuell durch die Verbundschichten 1 und 2 durchtretenden Geschosse. Der in Fig. 2 dargestellte, dreilagige Verbundwerkstoff mit ballistischer Schutzwirkung führt zu einer weiteren, deutlichen Steigerung der Schutzwirkung. Gute Ergebnisse mit dem dreilagigen Verbund wurden beispielsweise bei Dickenverhältnisse der Schichten zueinander von 25%/50%/25% oder 30%/40%/30% erzielt.

**Patentansprüche**

1. Verbundwerkstoff mit ballistischer Schutzwirkung aufweisend eine erste, äußere Schicht aus einer ersten Stahllegierung und mindestens eine unter der ersten Schicht angeordneten zweite Schicht aus einer zweiten Stahllegierung und mindestens eine unterhalb der zweiten Schicht angeordnete dritte Schicht aus einer dritten Stahllegierung vorgesehen ist,

   **dadurch gekennzeichnet, dass**

   die erste Stahllegierung der ersten Schicht ein Vergütungsstahl mit folgenden Legierungsbestandteilen in Gewichtsprozent (Gew.-%) aufweist:

| | | | | |
|---|---|---|---|---|
| 0,06 % | ≤ | C | ≤ | 0,25 %, |
| 0,05 % | ≤ | Si | ≤ | 0,4 %, |
| 0,3 % | ≤ | Mn | ≤ | 1,4 %, |
| 0,015 % | ≤ | Al | ≤ | 1,55 %, |
| | Mo | + Cr | ≤ | 0,5 %, |
| | | Ti | ≤ | 0,05 %, |
| | | Nb | ≤ | 0,1 %, |
| | | B | ≤ | 0,005 %, |
| | | P | ≤ | 0,08 %, |
| | | S | ≤ | 0,01 %, |
| | | Ni | ≤ | 4,0 %, |
| | | V | ≤ | 0,5 % und |

   Rest Fe und unvermeidbare Verunreinigungen, wobei die zweite Schicht eine höhere Dehnung aufweist als die erste, die zweite Stahllegierung der zweiten Schicht ein Sonderbaustahl ist, der die folgenden Legierungsbestandteile in Gew.-% aufweist:

| | | | | |
|---|---|---|---|---|
| | | C | ≤ | 0,4 %, |
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |
| | | V | ≤ | 0,5 %, |
| | | Mo | ≤ | 0,6 %, |
| | | P | ≤ | 0,1 % , |
| | | S | ≤ | 0,03 %, |
| | | N | ≤ | 0,3 %, |
| | | Ni | ≤ | 1,5 %, |
| | | Cu | ≤ | 3,0 %, |
| optional | | Sn | ≤ | 0,04 % und |

   Rest Fe und unvermeidbare Verunreinigungen, wobei die dritte Schicht in ihrer Zusammensetzung der ersten Metalllegierung entspricht.

2. Verbundwerkstoff mit ballistischer Schutzwirkung aufweisend eine erste, äußere Schicht aus einer ersten Stahllegierung und mindestens eine unter der ersten Schicht angeordneten zweite Schicht aus einer zweiten Stahllegierung und mindestens eine unterhalb der zweiten Schicht angeordnete dritte Schicht aus einer dritten Stahllegierung vorgesehen ist,

**dadurch gekennzeichnet, dass**

die erste Stahllegierung der ersten Schicht ein Mehrphasenstahl ist, der die folgenden Legierungsbestandteilen in Gewichtsprozent (Gew.-%) aufweist:

| | | | | |
|---|---|---|---|---|
| 0,065 % | ≤ | C | ≤ | 0,23 %, |
| 0,07 % | ≤ | Si | ≤ | 1,65 %, |
| 1,45 % | ≤ | Mn | ≤ | 2,65 %, |
| 0,02 % | ≤ | Al | ≤ | 1,55 %, |
| 0,06 % | ≤ | Cr | ≤ | 0,65 %, |
| 0,05 % | ≤ | Mo | ≤ | 0,14 % und |
| | | Ti | ≤ | 0,13 %, |
| | | Nb | ≤ | 0,03 %, |
| | | B | ≤ | 0,005 %, |
| | | P | ≤ | 0,08 %, |
| | | S | ≤ | 0,01 %, |
| | | Ni | ≤ | 4,0 %, |
| | | V | ≤ | 0,5 % und |

Rest Fe und unvermeidbare Verunreinigungen, wobei die zweite Schicht eine höhere Dehnung aufweist als die erste, die zweite Stahllegierung der zweiten Schicht aus einem Sonderbaustahl besteht, die die folgenden Legierungsbestandteile in Gew.-% aufweist:

| | | | | |
|---|---|---|---|---|
| | | C | ≤ | 0,4 %, |
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |
| | | V | ≤ | 0,5 %, |
| | | Mo | ≤ | 0,6 %, |
| | | P | ≤ | 0,1 %, |
| | | S | ≤ | 0,03 %, |
| | | N | ≤ | 0,3 %, |
| | | Ni | ≤ | 1,5 %, |
| | | Cu | ≤ | 3,0 %, |
| optional | | Sn | ≤ | 0,04 % und |

Rest Fe und unvermeidbare Verunreinigungen, wobei die dritte Schicht in ihrer Zusammensetzung der ersten Metalllegierung entspricht.

3. Verbundwerkstoff mit ballistischer Schutzwirkung aufweisend eine erste, äußere Schicht aus einer ersten Stahllegierung und mindestens eine unter der ersten Schicht angeordneten zweite Schicht aus einer zweiten Stahllegierung und mindestens eine unterhalb der zweiten Schicht angeordnete dritte Schicht aus einer dritten Stahllegierung vorgesehen ist,
**dadurch gekennzeichnet, dass**
die erste Stahllegierung der ersten Schicht ein Mehrphasenstahl ist, der die folgenden Legierungsbestandteilen in Gewichtsprozent (Gew.-%) aufweist:

| | | | | |
|---|---|---|---|---|
| 0,065 % | ≤ | C | ≤ | 0,16 %, |
| 0,07 % | ≤ | Si | ≤ | 0,75 %, |
| 1,45 % | ≤ | Mn | ≤ | 2,0 %, |

(fortgesetzt)

| | | | | |
|---|---|---|---|---|
| 0,02 % | ≤ | Al | ≤ | 0,05 %, |
| | | Cr | ≤ | 0,6 %, |
| | | Mo | ≤ | 0,05 %, |
| 0,05 % | ≤ | Ti | ≤ | 0,13 %, |
| | | Nb | ≤ | 0,1 %, |
| | | B | ≤ | 0,002 %, |
| | | P | ≤ | 0,08 %, |
| | | S | ≤ | 0,01 %, |
| | | Ni | ≤ | 4,0 %, |
| | | V | ≤ | 0,5 % und |

Rest Fe und unvermeidbare Verunreinigungen, wobei die zweite Schicht eine höhere Dehnung aufweist als die erste, die zweite Stahllegierung der zweiten Schicht aus einem Sonderbaustahl besteht, die die folgenden Legierungsbestandteile in Gew.-% aufweist:

| | | | | |
|---|---|---|---|---|
| | | C | ≤ | 0,4 %, |
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |
| | | V | ≤ | 0,5 %, |
| | | Mo | ≤ | 0,6 %, |
| | | P | ≤ | 0,1 %, |
| | | S | ≤ | 0,03 %, |
| | | N | ≤ | 0,3 %, |
| | | Ni | ≤ | 1,5 %, |
| | | Cu | ≤ | 3,0 %, |
| optional | | Sn | ≤ | 0,04 % und |

Rest Fe und unvermeidbare Verunreinigungen, wobei die dritte Schicht in ihrer Zusammensetzung der ersten Metalllegierung entspricht.

4. Verbundwerkstoff mit ballistischer Schutzwirkung aufweisend eine erste, äußere Schicht aus einer ersten Stahllegierung und mindestens eine unter der ersten Schicht angeordneten zweite Schicht aus einer zweiten Stahllegierung und mindestens eine unterhalb der zweiten Schicht angeordnete dritte Schicht aus einer dritten Stahllegierung vorgesehen ist,
**dadurch gekennzeichnet, dass**
die erste Stahllegierung der ersten Schicht ein Sicherheitsstahl ist, der die folgenden Legierungsbestandteilen in Gewichtsprozent (Gew.-%) aufweist:

| | | | | |
|---|---|---|---|---|
| 0,06 % | ≤ | C | ≤ | 0,4 %, |
| 0,05 % | ≤ | Si | ≤ | 1,0 %, |
| 0,3 % | ≤ | Mn | ≤ | 2,0 %, |
| 0,015 % | ≤ | Al | ≤ | 0,2 %, |
| | | Mo | ≤ | 0,7 %, |
| | | B | ≤ | 0,005%, |
| | | Cr | ≤ | 1,2 %, |
| | | Ti | ≤ | 0,13 %, |

(fortgesetzt)

| | | |
|---|---|---|
| Nb | ≤ | 0,1 %, |
| B | ≤ | 0,005 %, |
| P | ≤ | 0,08 %, |
| S | ≤ | 0,01 %, |
| Ni | ≤ | 3,7 %, |
| V | ≤ | 0,1 % und |

Rest Fe und unvermeidbare Verunreinigungen, wobei die zweite Schicht eine höhere Dehnung aufweist als die erste, die zweite Stahllegierung der zweiten Schicht aus einem Sonderbaustahl besteht, die die folgenden Legierungsbestandteile in Gew.-% aufweist:

| | | | | |
|---|---|---|---|---|
| | | C | ≤ | 0,4 %, |
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |
| | | V | ≤ | 0,5 %, |
| | | Mo | ≤ | 0,6 %, |
| | | P | ≤ | 0,1 %, |
| | | S | ≤ | 0,03 %, |
| | | N | ≤ | 0,3 %, |
| | | Ni | ≤ | 1,5 %, |
| | | Cu | ≤ | 3,0 %, |
| optional | | Sn | ≤ | 0,04 % und |

Rest Fe und unvermeidbare Verunreinigungen, wobei die dritte Schicht in ihrer Zusammensetzung der ersten Metalllegierung entspricht.

5. Verbundwerkstoff nach einem der Ansprüche 1 bis 4,
**dadurch gekennzeichnet, dass**
die Stahllegierungen der Schichten des Verbundwerkstoffs Nickel und/oder Kobalt frei sind.

6. Verbundwerkstoff nach einem der Ansprüche 1 bis 5,
**dadurch gekennzeichnet, dass**
der Verbundwerkstoff durch Walzplattieren hergestellt wird.

7. Verwendung eines Verbundwerkstoffes nach einem der Ansprüche 1 bis 6 als Material für einen ballistischen Schutz für Lebewesen, Vorrichtungen, insbesondere Kraftfahrzeuge oder Bauwerke.

**Claims**

1. Composite material with a ballistic protective effect having a first, outer layer made of a first steel alloy and at least one second layer which is arranged under the first layer and is made of a second steel alloy, and there is provided at least one third layer which is arranged below the second layer and is made of a third steel alloy **characterised in that** the first steel alloy of the first layer is a heat-treatable steel with the following alloy constituents in per cent by weight (% by weight) :

| | | | | |
|---|---|---|---|---|
| 0.06 % | ≤ | C | ≤ | 0.25 %, |
| 0.05 % | ≤ | Si | ≤ | 0.4 %, |

(continued)

| | | | | |
|---|---|---|---|---|
| 0.3 % | ≤ | Mn | ≤ | 1.4 %, |
| 0.015 % | ≤ | Al | ≤ | 1.55 %, |
| | Mo + | Cr | ≤ | 0.5 %, |
| | | Ti | ≤ | 0.05 %, |
| | | Nb | ≤ | 0.1 %, |
| | | B | ≤ | 0.005 %, |
| | | P | ≤ | 0.08 %, |
| | | S | ≤ | 0.01 %, |
| | | Ni | ≤ | 4.0 %, |
| | | V | ≤ | 0.5 % and |

the remainder being Fe and inevitable impurities, the second layer having higher elongation than the first, the second layer consists of a special structural steel with the following alloy constituents in % by weight:

| | | | | |
|---|---|---|---|---|
| | | C | ≤ | 0.4 %, |
| | | Si | ≤ | 0.8 %, |
| 0.05 % | ≤ | Mn | ≤ | 1.5 %, |
| | | Al | ≤ | 10.0 %, |
| | | Cr | ≤ | 1.5 %, |
| | | Ti | ≤ | 0.5 %, |
| | | Nb | ≤ | 0.05 %, |
| | | B | ≤ | 0.005 %, |
| | | V | ≤ | 0.5 %, |
| | | Mo | ≤ | 0.6 %, |
| | | P | ≤ | 0.1 %, |
| | | S | ≤ | 0.03 %, |
| | | N | ≤ | 0.3 %, |
| | | Ni | ≤ | 1.5 %, |
| | | Cu | ≤ | 3.0 %, |
| optionally | | Sn | ≤ | 0.04 % and |

the remainder being Fe and inevitable impurities, wherein the composition of the third layer corresponds to that of the first steel alloy layer.

2. Composite material with a ballistic protective effect having a first, outer layer made of a first steel alloy and at least one second layer which is arranged under the first layer and is made of a second steel alloy, and there is provided at least one third layer which is arranged below the second layer and is made of a third steel alloy **characterised in that** the first steel alloy of the first layer is a polyphase steel having the following alloy constituents in per cent by weight (% by weight) :

| | | | | |
|---|---|---|---|---|
| 0.065 % | ≤ | C | ≤ | 0.23 %, |
| 0.07 % | ≤ | Si | ≤ | 1.65 %, |
| 1.45 % | ≤ | Mn | ≤ | 2.65 %, |
| 0.02 % | ≤ | Al | ≤ | 1.55 %, |
| 0.06 % | ≤ | Cr | ≤ | 0.65 %, |
| 0.05 % | ≤ | Mo | ≤ | 0.14 %, and |
| | | Ti | ≤ | 0.13 %, |
| | | Nb | ≤ | 0.03 %, |
| | | B | ≤ | 0.005 %, |
| | | P | ≤ | 0.08 %, |
| | | S | ≤ | 0.01 %, |
| | | Ni | ≤ | 4.0 %, |

(continued)

|  | | V | $\leq$ | 0.5 % and |

the remainder being Fe and inevitable impurities, the second layer having higher elongation than the first, the second layer consists of a special structural steel with the following alloy constituents in % by weight:

| | | C | $\leq$ | 0.4 %, |
| | | Si | $\leq$ | 0.8 %, |
| 0.05 % | $\leq$ | Mn | $\leq$ | 1.5 %, |
| | | Al | $\leq$ | 10.0 %, |
| | | Cr | $\leq$ | 1.5 %, |
| | | Ti | $\leq$ | 0.5 %, |
| | | Nb | $\leq$ | 0.05 %, |
| | | B | $\leq$ | 0.005 %, |
| | | V | $\leq$ | 0.5 %, |
| | | Mo | $\leq$ | 0.6 %, |
| | | P | $\leq$ | 0.1 %, |
| | | S | $\leq$ | 0.03 %, |
| | | N | $\leq$ | 0.3 %, |
| | | Ni | $\leq$ | 1.5 %, |
| | | Cu | $\leq$ | 3.0 %, |
| optionally | | Sn | $\leq$ | 0.04 % and |

the remainder being Fe and inevitable impurities, wherein the composition of the third layer corresponds to that of the first steel alloy layer.

3. Composite material with a ballistic protective effect having a first, outer layer made of a first steel alloy and at least one second layer which is arranged under the first layer and is made of a second steel alloy, and there is provided at least one third layer which is arranged below the second layer and is made of a third steel alloy **characterised in that** the first steel alloy of the first layer is a a polyphase steel having the following alloy constituents in per cent by weight (% by weight) :

| 0.065 % | $\leq$ | C | $\leq$ | 0.16 %, |
| 0.07 % | $\leq$ | Si | $\leq$ | 0.75 %, |
| 1.45 % | $\leq$ | Mn | $\leq$ | 2.0 %, |
| 0.02 % | $\leq$ | Al | $\leq$ | 0.05 %, |
| | | Cr | $\leq$ | 0.6 %, |
| | | Mo | $\leq$ | 0.05 %, |
| 0.05 % | $\leq$ | Ti | $\leq$ | 0.13 %, |
| | | Nb | $\leq$ | 0.1 %, |
| | | B | $\leq$ | 0.002 %, |
| | | P | $\leq$ | 0.08 %, |
| | | S | $\leq$ | 0.01 %, |
| | | Ni | $\leq$ | 4.0 %, |
| | | V | $\leq$ | 0.5 % and |

the remainder being Fe and inevitable impurities, the second layer having higher elongation than the first, the second layer consists of a special structural steel with the following alloy constituents in % by weight:

| | | C | $\leq$ | 0.4 %, |
| | | Si | $\leq$ | 0.8 %, |
| 0.05 % | $\leq$ | Mn | $\leq$ | 1.5 %, |
| | | Al | $\leq$ | 10.0 %, |

(continued)

| | | |
|---|---|---|
| Cr | ≤ | 1.5 %, |
| Ti | ≤ | 0.5 %, |
| Nb | ≤ | 0.05 %, |
| B | ≤ | 0.005 %, |
| V | ≤ | 0.5 %, |
| Mo | ≤ | 0.6 %, |
| P | ≤ | 0.1 %, |
| S | ≤ | 0.03 %, |
| N | ≤ | 0.3 %, |
| Ni | ≤ | 1.5 %, |
| Cu | ≤ | 3.0 %, |

optionally    Sn    ≤    0.04 % and

the remainder being Fe and inevitable impurities, wherein the composition of the third layer corresponds to that of the first steel alloy layer.

4. Composite material with a ballistic protective effect having a first, outer layer made of a first steel alloy and at least one second layer which is arranged under the first layer and is made of a second steel alloy, and there is provided at least one third layer which is arranged below the second layer and is made of a third steel alloy **characterised in that** the first steel alloy of the first layer is a safety steel having the following alloy constituents in per cent by weight (% by weight):

| | | | | |
|---|---|---|---|---|
| 0.06 % | ≤ | C | ≤ | 0.4 %, |
| 0.05 % | ≤ | Si | ≤ | 1.0 %, |
| 0.3 % | ≤ | Mn | ≤ | 2.0 %, |
| 0.015 % | ≤ | Al | ≤ | 0.2 %, |
| | | Mo | ≤ | 0.7 %, |
| | | B | ≤ | 0.005 %, |
| | | | | |
| | | Cr | ≤ | 1.2 %, |
| | | Ti | ≤ | 0.13 %, |
| | | Nb | ≤ | 0.1 %, |
| | | B | ≤ | 0.005 %, |
| | | P | ≤ | 0.08 %, |
| | | S | ≤ | 0.01 %, |
| | | Ni | ≤ | 3.7 %, |
| | | V | ≤ | 0.1 % and |

the remainder being Fe and inevitable impurities, the second layer having higher elongation than the first, the second layer consists of a special structural steel with the following alloy constituents in % by weight:

| | | | | |
|---|---|---|---|---|
| | | C | ≤ | 0.4 %, |
| | | Si | ≤ | 0.8 %, |
| 0.05 % | ≤ | Mn | ≤ | 1.5 % , |
| | | Al | ≤ | 10.0 %, |
| | | Cr | ≤ | 1.5 %, |
| | | Ti | ≤ | 0.5 %, |
| | | Nb | ≤ | 0.05 %, |
| | | B | ≤ | 0.005 %, |
| | | V | ≤ | 0.5 %, |
| | | Mo | ≤ | 0.6 %, |
| | | P | ≤ | 0.1 %, |

(continued)

| | | | |
|---|---|---|---|
| | S | ≤ | 0.03 %, |
| | N | ≤ | 0.3 %, |
| | Ni | ≤ | 1.5 %, |
| | Cu | ≤ | 3.0 %, |
| optionally | Sn | ≤ | 0.04 % and |

the remainder being Fe and inevitable impurities, wherein the composition of the third layer corresponds to that of the first steel alloy layer.

5. Composite material according to any one of Claims 1 to 4, **characterised in that** the steel alloys of the layers of the composite material are nickel- and/or cobalt-free.

6. Composite material according to any one of Claims 1 to 5, **characterised in that** the composite material is manufactured by roll cladding.

7. Use of a composite material according to any one of Claims 1 to 6 as material for ballistic protection for living beings, devices, in particular motor vehicles or constructions.

**Revendications**

1. Matière composite avec effet de protection balistique présentant une première couche extérieure en un premier alliage d'acier et au moins une deuxième couche, disposée sous la première couche, en un deuxième alliage d'acier et au moins une troisième couche, disposée en-dessous de la deuxième couche, en un troisième alliage d'acier, **caractérisée en ce que**
le premier alliage d'acier de la première couche présente un acier trempé avec les composants d'alliage suivants en pourcentage en poids (% en poids) :

| | | | | |
|---|---|---|---|---|
| 0,06% | ≤ | C | ≤ | 0,25 %, |
| 0,05% | ≤ | Si | ≤ | 0,4 %, |
| 0,3 % | ≤ | Mn | ≤ | 1,4 %, |
| 0,015% | ≤ | Al | ≤ | 1,55 %, |
| | Mo + Cr | | ≤ | 0,5 %, |
| | Ti | | ≤ | 0,05 %, |
| | Nb | | ≤ | 0,1 %, |
| | B | | ≤ | 0,005 %, |
| | P | | ≤ | 0,08 %, |
| | S | | ≤ | 0,01 %, |
| | Ni | | ≤ | 4,0 %, |
| | V | | ≤ | 0,5 % et |

le reste étant du Fe et des impuretés inévitables, dans laquelle la deuxième couche présente une ductilité supérieure à la première, le deuxième alliage d'acier de la deuxième couche est un acier spécial de construction, lequel présente les composants d'alliage suivants en % en poids :

| | | | | |
|---|---|---|---|---|
| | | C | ≤ | 0,4 %, |
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |

(suite)

| | | |
|---|---|---|
| V | ≤ | 0,5 %, |
| Mo | ≤ | 0,6 %, |
| P | ≤ | 0,1 %, |
| S | ≤ | 0,03 %, |
| N | ≤ | 0,3 %, |
| Ni | ≤ | 1,5 %, |
| Cu | ≤ | 3,0 %, |
| en option Sn | ≤ | 0,04 % et |

le reste étant du Fe et des impuretés inévitables, dans laquelle la troisième couche correspond de par sa composition au premier alliage métallique.

2. Matière composite avec effet de protection balistique présentant une première couche extérieure en un premier alliage d'acier et au moins une deuxième couche, disposée sous la première couche, en un deuxième alliage d'acier et au moins une troisième couche, disposée en-dessous de la deuxième couche, en un troisième alliage d'acier, **caractérisée en ce que**
le premier alliage d'acier de la première couche est un acier polyphasé, lequel présente les composants d'alliage suivants en pourcentage en poids (% en poids) :

| | | | | |
|---|---|---|---|---|
| 0,065 % | ≤ | C | ≤ | 0,23 %, |
| 0,07 % | ≤ | Si | ≤ | 1,65 %, |
| 1,45 % | ≤ | Mn | ≤ | 2,65 %, |
| 0,02 % | ≤ | Al | ≤ | 1,55 %, |
| 0,06 % | ≤ | Cr | ≤ | 0,65 %, |
| 0,05 % | ≤ | Mo | ≤ | 0,4 % et |
| | | Ti | ≤ | 0,13 %, |
| | | Nb | ≤ | 0,03 %, |
| | | B | ≤ | 0,005 %, |
| | | P | ≤ | 0,08 %, |
| | | S | ≤ | 0,01 %, |
| | | Ni | ≤ | 4,0 %, |
| | | V | ≤ | 0,5 % et |

le reste étant du Fe et des impuretés inévitables, dans laquelle la deuxième couche présente une ductilité supérieure à la première, le deuxième alliage d'acier de la deuxième couche se compose d'un acier spécial de construction, lequel présente les composants d'alliage suivants en % en poids :

| | | | | |
|---|---|---|---|---|
| | | C | ≤ | 0,4 %, |
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |
| | | V | ≤ | 0,5 %, |
| | | Mo | ≤ | 0,6 %, |
| | | P | ≤ | 0,1 %, |
| | | S | ≤ | 0,03 %, |
| | | N | ≤ | 0,3 %, |
| | | Ni | ≤ | 1,5 %, |
| | | Cu | ≤ | 3,0 %, |

(suite)

| en option | Sn | ≤ | 0,04 % et |

le reste étant du Fe et des impuretés inévitables, dans laquelle la troisième couche correspond de par sa composition au premier alliage métallique.

**3.** Matière composite avec effet de protection balistique présentant une première couche extérieure en un premier alliage d'acier et au moins une deuxième couche, disposée sous la première couche, en un deuxième alliage d'acier et au moins une troisième couche, disposée en-dessous de la deuxième couche, en un troisième alliage d'acier, **caractérisée en ce que**
le premier alliage d'acier de la première couche est un acier polyphasé, lequel présente les composants d'alliage suivants en pourcentages en poids (% en poids) :

| 0,065 % | ≤ | C | ≤ | 0,16 %, |
|---|---|---|---|---|
| 0,07% | ≤ | Si | ≤ | 0,75 %, |
| 1,45 % | ≤ | Mn | ≤ | 2,0 %, |
| 0,02% | ≤ | Al | ≤ | 0,05 %, |
| | | Cr | ≤ | 0,6 %, |
| | | Mo | ≤ | 0,05 %, |
| 0,05 % | ≤ | Ti | ≤ | 0,13 %, |
| | | Nb | ≤ | 0,1 %, |
| | | B | ≤ | 0,002 %, |
| | | P | ≤ | 0,08 %, |
| | | S | ≤ | 0,01 %, |
| | | Ni | ≤ | 4,0 %, |
| | | V | ≤ | 0,5 % et |

le reste étant du Fe et des impuretés inévitables, dans laquelle la deuxième couche présente une ductilité supérieure à la première, le deuxième alliage d'acier de la deuxième couche se compose d'un acier spécial de construction, lequel présente les composants d'alliage suivants en % en poids :

| | | C | ≤ | 0,4 %, |
|---|---|---|---|---|
| | | Si | ≤ | 0,8 %, |
| 0,05 % | ≤ | Mn | ≤ | 1,5 %, |
| | | Al | ≤ | 10,0 %, |
| | | Cr | ≤ | 1,5 %, |
| | | Ti | ≤ | 0,5 %, |
| | | Nb | ≤ | 0,05 %, |
| | | B | ≤ | 0,005 %, |
| | | V | ≤ | 0,5 %, |
| | | Mo | ≤ | 0,6 %, |
| | | P | ≤ | 0,1 %, |
| | | S | ≤ | 0,03 %, |
| | | N | ≤ | 0,3 %, |
| | | Ni | ≤ | 1,5 %, |
| | | Cu | ≤ | 3,0 %, |
| en option | | Sn | ≤ | 0,04 % et |

le reste étant du Fe et des impuretés inévitables, dans laquelle la troisième couche correspond de par sa composition au premier alliage métallique.

**4.** Matière composite avec effet de protection balistique présentant une première couche extérieure en un premier alliage d'acier et au moins une deuxième couche, disposée sous la première couche, en un deuxième alliage d'acier et au moins une troisième couche, disposée en-dessous de la deuxième couche, en un troisième alliage d'acier,
**caractérisée en ce que**
le premier alliage d'acier de la première couche est un acier de blindage, lequel présente les composants d'alliage
suivants en pourcentage en poids (% en poids) :

| | | | | |
|---|---|---|---|---|
| 0,06 % | $\leq$ | C | $\leq$ | 0,4 %, |
| 0,05 % | $\leq$ | Si | $\leq$ | 1,0 %, |
| 0,3 % | $\leq$ | Mn | $\leq$ | 2,0 %, |
| 0,015 % | $\leq$ | Al | $\leq$ | 0,2 %, |
| | | Mo | $\leq$ | 0,7 % |
| | | B | $\leq$ | 0,005 %, |
| | | Cr | $\leq$ | 1,2 %, |
| | | Ti | $\leq$ | 0,13 %, |
| | | Nb | $\leq$ | 0,1 %, |
| | | B | $\leq$ | 0,005 % |
| | | P | $\leq$ | 0,08 %, |
| | | S | $\leq$ | 0,01 %, |
| | | Ni | $\leq$ | 3,7 %, |
| | | V | $\leq$ | 0,1 % et |

le reste étant du Fe et des impuretés inévitables, dans laquelle la deuxième couche présente une ductilité supérieure à la première, le deuxième alliage d'acier de la deuxième couche se compose d'un acier spécial de construction, lequel présente les composants d'alliage suivants en % en poids :

| | | | | |
|---|---|---|---|---|
| | | C | $\leq$ | 0,4 %, |
| | | Si | $\leq$ | 0,8 %, |
| 0,05 % | $\leq$ | Mn | $\leq$ | 1,5 %, |
| | | Al | $\leq$ | 10,0 %, |
| | | Cr | $\leq$ | 1,5 %, |
| | | Ti | $\leq$ | 0,5 %, |
| | | Nb | $\leq$ | 0,05 %, |
| | | B | $\leq$ | 0,005 %, |
| | | V | $\leq$ | 0,5 %, |
| | | Mo | $\leq$ | 0,6 %, |
| | | P | $\leq$ | 0,1 %, |
| | | S | $\leq$ | 0,03 %, |
| | | N | $\leq$ | 0,3 %, |
| | | Ni | $\leq$ | 1,5 %, |
| | | Cu | $\leq$ | 3,0 %, |
| en option | | Sn | $\leq$ | 0,04 % et |

le reste étant du Fe et des impuretés inévitables, dans laquelle la troisième couche correspond de par sa composition au premier alliage métallique.

**5.** Matière composite selon l'une des revendications 1 à 4,
**caractérisée en ce que**
les alliages d'acier des couches de la matière composite sont exemptes de nickel et/ou cobalt.

**6.** Matière composite selon l'une des revendications 1 à 5,
**caractérisée en ce que**
la matière composite est fabriquée par plaquage par laminage.

**7.** Utilisation d'une matière composite selon l'une des revendications 1 à 6 en tant que matériau pour une protection balistique pour des êtres vivants, des dispositifs, en particulier des véhicules ou constructions.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2921854 C1
- AT 372113
- US 2438759 A
- DE 102005006606 B3
- US 5418074 A
- EP 0509854 A
- US 4645720 A
- US 20030029530 A1